# EUROPÄISCHE PATENTSCHRIFT

(11) **EP 1 081 314 B1**
(45) Veröffentlichungstag und Bekanntmachung des Hinweises auf die Patenterteilung: **23.11.2005**
(21) Anmeldenummer: 00118943.0
(22) Anmeldetag: 01.09.2000
(51) Int. Cl.: E04H 17/14, A01G 1/08

(54) **Rasen- oder Beetkantenstein**
Lawn or flower-bed border stone
Pierre de bordure de pelouse ou de platebande

(30) Priorität: 02.09.1999 DE 29915545 U
(43) Veröffentlichungstag der Anmeldung: 07.03.2001
(73) Patentinhaber: KANN GmbH Baustoffwerke, 56170 Bendorf-Mülhofen (DE)
(72) Erfinder: Schmitz, Michael, 77836 Rheinmünster (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 543 143
- DE-A- 2 753 086
- DE-U- 29 912 039
- US-A- 2 888 779
- US-A- 5 154 032

## Beschreibung

Die Erfindung betrifft einen Rasen- oder Beetkantenstein gemäß dem Oberbegriff des Anspruchs 1.

Um eine Rasen- oder Beetfläche einzugrenzen, ist es bekannt, die Fläche zumindest in einem Teilbereich ihres Umfangs mit einer aus in Reihe angeordneten Steinen gebildeten Kante einzufassen. Die Kante bildet somit eine saubere Abgrenzung gegenüber der Umgebung. Im Falle einer Rasenkante, von der im folgenden beispielhaft ausgegangen werden soll, liegt die Oberseite der Rasenkante im wesentlichen auf dem Höhenniveau der Rasenfläche, so daß ein Rasenmäher mit seinen seitlichen Rädern auf der Rasenkante entlang geführt werden kann, wodurch das Mähen des Grases im Randbereich der Rasenfläche erleichtert ist.

Häufig wird als Rasenkantenstein zur Bildung einer Rasenkante ein Stein mit einer quaderförmigen Gestalt verwendet. Dieser eignet sich zwar gut zur Bildung einer geraden Rasenkante, jedoch ist es schwierig, mit derartigen Steinen Biegungen und Abwinkelungen der Rasenkante auszubilden. Wenn man die quaderförmigen Steine zur Bildung einer Abwinkelung mit einem gegenseitigen Winkelversatz anordnet, verbleibt auf der einen Seite ein relativ großer Spalt, so daß keine kontinuierliche Oberfläche der Rasenkante gegeben ist. Um diesen Spalt zu vermeiden, müßte ein speziell geformtes Zwischenstück eingesetzt werden. Dabei sind je nach Größe der gewünschten Abwinkelung unterschiedliche Zwischenstücke vorzusehen. Verschiedene Zwischenstücke vorzuhalten ist jedoch herstellungstechnisch ungünstig, erfordert einen erhöhten Lageraufwand und kompliziert den Einbau der Rasenkante.

Aus der DE-U-75 29 954 ist ein Rasen- oder Beetkantenstein bekannt, der auf seiner einen Stirnseite einen sich im wesentlichen über die gesamte Breite der Stirnseite erstreckenden Kopf mit teilkreisförmig konvexem Querschnitt besitzt. Auf der entgegengesetzten Stirnseite ist eine Aufnahme in Form einer teilkreisförmigen konkaven Hohlkehle ausgebildet, die sich ebenfalls über die gesamte Breite der Stirnseite erstreckt. Da der Kopf in verschiedenen Positionen innerhalb der Aufnahme angeordnet sein kann, ist zwischen benachbarten Rasen- oder Beetkantensteinen eine Art Gelenk mit vertikaler Gelenkachse gebildet, das es ermöglicht, zwischen benachbarten Rasen- oder Beetkantensteinen eine Abwinkelung auszugestalten, so daß auch polygonartige Verläufe einer Rasenkante gebildet werden können, ohne Zwischenelemente vorsehen zu müssen. Damit ist der weitere Vorteil verbunden, daß örtlich begrenzt auftretende, im wesentlichen senkrecht zur Rasenkante gerichtete Kräfte besser aufgenommen werden können, da nebeneinander angeordnete Rasenkantensteine miteinander in Eingriff stehen.

Die Gestaltungsmöglichkeiten einer Rasenkante sind wesentlich davon abhängig, welche unterschiedlichen Abwinkelungen zwischen zwei benachbarten Rasenkantensteinen ausgebildet werden können. Gemäß der DE-U-75 29 954 ist einerseits vorgesehen, den Kopf wesentlich breiter als den Rasenkantenstein auszubilden, damit sich der Kopfüber einen möglichst großen Umfangswinkel erstreckt und somit auch rechtwinklige Abwinkelungen zwischen benachbarten Rasenkantensteinen zu erzielen sind. Alternativ ist es aus dieser Druckschrift bekannt, auf der Vorderfläche und auf der Rückfläche jeweils einen wellenförmigen Kantenverlauf auszubilden, so daß auf diesen Flächen jeweils eine sich über die gesamte Höhe des Rasenkantensteins erstreckende Vertiefung ausgebildet ist und sich die Umfangsfläche des Kopfes bis in die Vertiefungen hinein erstreckt. In beiden Fällen ist der Nachteil gegeben, daß sich starke Breitenschwankungen der Rasenkante in deren Längsrichtung ergeben, was durch den auf beiden Seiten seitlich hervorstehenden Kopf oder die beidseitigen Vertiefungen bedingt ist. Somit ist ein gleichmäßiger, kontinuierlicher Abschluß der Rasenkante gegenüber der Rasenfläche nicht gegeben.

Aus der DE-A-27 53 086, von der im Oberbegriff des Anspruchs 1 ausgegangen wird, ist ein Baustein bekannt, der als Mauerstein, für Einfriedungen aller Art und auch als Böschungssicherung verwendet werden kann. Der Baustein besitzt auf einer seiner Stirnseiten einen hervorstehenden, konvexen Kopf und auf der entgegengesetzten anderen Stirnseite eine komplementär ausgebildete Aufnahme in Form einer entsprechenden Ausnehmung. Wenn zwei Bausteine nebeneinander angeordnet werden, kann der Kopf des einen Bausteins mit der Aufnahme des benachbarten Bausteins in Eingriff treten, um einerseits einen gegenseitige Sicherung der Bausteine in Querrichtung zu erreichen und um andererseits auch Abwinkelungen der Rasen- oder Beetkante oder auch Verzweigungen zu ermöglichen.

Bei dem Baustein gemäß der DE-A-27 53 086 ist die Aufnahme sehr klein und sehr flach ausgebildet, was den Nachteil mit sich bringt, dass der gegenseitige Eingriff zweier benachbarter Bausteine nicht sehr wirkungsvoll ist, insbesondere wenn man berücksichtigt, dass im Gartenbau zwischen den Bausteinen immer eine relativ große Fuge verbleibt. Auf diese Weise kann es zu gegenseitigen Querverschiebungen benachbarter Bausteine kommen, was jedoch vermieden werden soll.

Der Erfindung liegt die Aufgabe zugrunde, einen Rasen- oder Beetkantenstein der genannten Art zu schaffen, mit dem die vorgenannten Probleme vermieden sind und der dem Benutzer aufgrund seiner konstruktiven Ausgestaltung sowohl eine starke Abwinkelung zwischen benachbarten Rasen- oder Beetkantensteinen als auch einen wirkungsvollen gegenseitigen Eingriff zwischen benachbarten Rasen- oder Beetkantensteinen ermöglicht.

Diese Aufgabe wird erfindungsgemäß durch einen Rasen- oder Beetkantenstein mit den Merkmalen des Anspruchs 1 gelöst. Dabei ist vorgesehen, dass sich die Aufnahme über einen Winkel von ca. 90° erstreckt und das die Vorderfläche und die Rückfläche in ihrem der Aufnahme zugewandten Endbereich zur Mitte des Rasen- oder Beetkantensteins so eingezogen sind, dass die Breite der Aufnahme um ca. 10% geringer als der gegenseitige Abstand der Vorder- und der Rückfläche ist.

Bei dem erfindungsgemäßen Rasen- oder Beetkantenstein ist ebenfalls auf der Rückfläche eine sich über die gesamte Höhe des Rasen- oder Beetkantenstein erstreckende Vertiefung ausgebildet, wobei sich die Umfangsfläche des Kopfes bis in die Vertiefung hinein erstreckt. Auf diese Weise ist die Umfangsfläche des Kopfes um den in die Vertiefung hineinreichenden Abschnitt vergrößert, wodurch erreicht ist, daß das von dem Kopf und einer mit diesem in Eingriff stehenden Aufnahme gebildeten Gelenk über einen ausreichend großen Winkelbereich verstellt werden kann, so daß zwischen benachbarten Rasen- oder Beetkantensteinen auch Abwinkelungen von 90° zu erzielen sind. Um auf der der Rasenfläche zugewandten Vorderseite einer Rasenkante jedoch eine möglichst kontinuierliche, ebene Fläche zu erreichen, ist erfindungsgemäß vorgesehen, daß die Vorderseite des Rasen- oder Beetkantenstein im wesentlichen eben ausgebildet ist und glatt sowie stufenlos in die Umfangsfläche des Kopfes übergeht, ohne daß Nuten, Ausnehmungen oder Vorsprünge vorgesehen sind.

Auf diese Weise ist einerseits eine scharfe Kante zwischen der Aufnahme und der Vorder- bzw. Rückfläche gebildet, die in der extrem abgewinkelten Stellung zweier benachbarter Rasen- oder Beetkantensteine ein kollisionsfreies Eintauchen in die Vertiefung ermöglicht. Andererseits kann durch das endseitige Einziehen der Vorder- und der Rückfläche die Breite der Aufnahme verringert werden, so daß benachbarte Rasen- oder Beetkantensteine über einen größeren Winkelbereich verstellt werden können. Um dabei Abstufungen oder Unregelmäßigkeiten auf der Vorder- oder der Rückfläche des Rasen- oder Beetkantensteins zu vermeiden oder zumindest gering zu halten, ist vorzugsweise vorgesehen, daß die eingezogenen Endbereiche glatt, beispielsweise in stetiger Krümmung, in die jeweilige Vorder- bzw. Rückfläche übergehen.

Insbesondere sollte dabei vorgesehen sein, daß die Rückfläche ausgehend von ihrem eingezogenen Endbereich einen konvex gekrümmten Abschnitt aufweist, der stetig in die konkav gekrümmte Vertiefung übergeht, an die sich stetig die konvex gekrümmte Umfangfläche des Kopfes anschließt. Die Umfangsfläche des Kopfes geht glatt und stetig in die Vorderfläche über, die an ihrem aufnahmeseitigen Ende glatt in den eingezogenen Endbereich übergeht. Auf diese Weise ist die Oberfläche des Rasen- oder Beetkantensteins zwischen den beiden Kanten der eingezogenen Endabschnitte, d.h. auf der Vorder- und der Rückfläche sowie der kopfseitigen Stirnseite, ohne Abstufungen oder Abwinkelungen in stetigem, kontinuierlichem, glattem Verlauf ausgestaltet, wodurch Kerbspannungen vermieden sind.

Alternativ können die eingezogenen Endbereiche jedoch unter Bildung einer geringen Abwinkelung in die Vorder- bzw. die Rückfläche übergehen.

Wenn der Kopf eine stetig gekrümmte Umfangsfläche besitzt, verläuft die Vorderfläche vorzugsweise tangential zur Umfangsfläche des Kopfes. Da auf der Vorderfläche keine Vertiefung ausgebildet ist, ist zwar der Winkelbereich, über den das Gelenk verstellt werden kann, beschränkt, jedoch ermöglicht die unterschiedliche Ausgestaltung der Vorder- und der Rückfläche des Rasen- oder Beetkantenstein eine deutliche Erhöhung der Gestaltungsmöglichkeiten für die Benutzer, da in Abhängigkeit von der gegenseitigen Ausrichtung benachbarter Rasen- oder Beetkantensteine unterschiedliche Kantenverläufe erzielt werden.

In bevorzugter Ausgestaltung der Erfindung ist die Vertiefung auf der Rückfläche im wesentlichen mittig angeordnet. Dabei kann sie einen im wesentlichen parallel zur Rückfläche verlaufenden Vertiefungsgrund und schräg dazu verlaufende Seitenwände aufweisen, von denen eine Teil der Umfangsfläche des Kopfes ist. Es ist jedoch auch möglich, daß die Vertiefung im Querschnitt im wesentlichen konkav ausgebildet ist und glatt und stetig in die Rückfläche und die Umfangsfläche des Kopfes übergeht. Auf diese Weise sind auf der Rückfläche keine Absätze, Ecken oder Kanten vorhanden, womit der Vorteil verbunden ist, daß im Rasen- oder Beetkantenstein punktuelle Kerbspannungen vermieden sind.

In einer weiteren Ausgestaltungsmöglichkeit ist vorgesehen, daß der Kopf und die Aufnahme jeweils mittig auf der jeweiligen Stirnseite ausgebildet sind, wobei sie in ihrer Breite vorzugsweise dem gegenseitigen Abstand der Rück- und der Vorderfläche entsprechen. Jedoch können auch breitere oder schmalere Köpfe sowie insbesondere eine schmalere Aufnahme vorgesehen sein.

Die Umfangsfläche des Kopfes sollte sich über einen Winkelbereich von ca. 180° bis 225° erstrecken. Dabei kann vorgesehen sein, daß der Kopf einen teilkreisförmig konvexen Querschnitt aufweist, alternativ kann der Kopf jedoch auch einen polygonförmigen Querschnitt insbesondere in Form eines regelmäßigen Vielecks besitzen. Der glatte, stufenlose Übergang zwischen der Rückfläche und der Umfangsfläche des Kopfes ist in diesem Fall dadurch erreicht, daß entweder eine der Umfangs-Teilflächen des Kopfes Bestandteil der Rückfläche ist oder die Umfangsfläche des Kopfes unter einer Abwinkelung an die Rückfläche anschließt. Dabei können der Kopf und die Aufnahme zwar nur in vorbestimmten Relativstellungen angeordnet werden, besitzen jedoch einen besseren und insbesondere drehfesten Eingriff. Die teilkreisförmige Ausgestaltung des Kopfes und der Aufnahme ermöglichen hingegen eine stufenlose Winkelverstellung zwischen benachbarten Rasen- oder Beetkantensteinen.

Die Aufnahme, die an der dem Kopf entgegengesetzten Stirnseite ausgebildet ist, weist eine der Ausgestaltung des Kopfes komplementäre Ausgestaltung auf. Vorzugsweise ist die Aufnahme als Hohlkehle ausgebildet, die entsprechend der Kopfgestaltung entweder einen teilkreisförmigen konkaven Querschnitt oder einen polygonförmigen Querschnitt besitzt. Dabei weist die Aufnahme eine Umrißlinie über einen Winkelbereich 90° auf.

Üblicherweise besteht der Rasen- oder Beetkantenstein aus Beton und weist über seine Höhe, die in der Regel bei ca. 2 cm bis 8 cm und insbesondere bei 4 bis 5 cm liegt, einen im wesentlichen konstanten Querschnitt auf.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: eine Aufsicht auf einen Rasen- oder Beetkantenstein gemäß einer ersten Ausführungsform,
- Fig. 2: zwei Rasen- oder Beetkantensteine gemäß Fig. 1 zur Bildung einer Rasenkante in gegenseitigem Eingriff und in geradliniger Ausrichtung,
- Fig. 3: mehrere Rasen- oder Beetkantensteine gemäß Fig. 1 bei Bildung einer Rasenkante in gegenseitigem Eingriff unter Bildung von Abwinklungen,
- Fig. 4: eine Aufsicht auf einen Rasen- oder Beetkantenstein gemäß einer zweiten Ausführungsform und
- Fig. 5: mehrere Rasen- oder Beetkantensteine gemäß Fig. 4 in gegenseitigem Eingriff zur Bildung einer abgewinkelten Rasenkante.

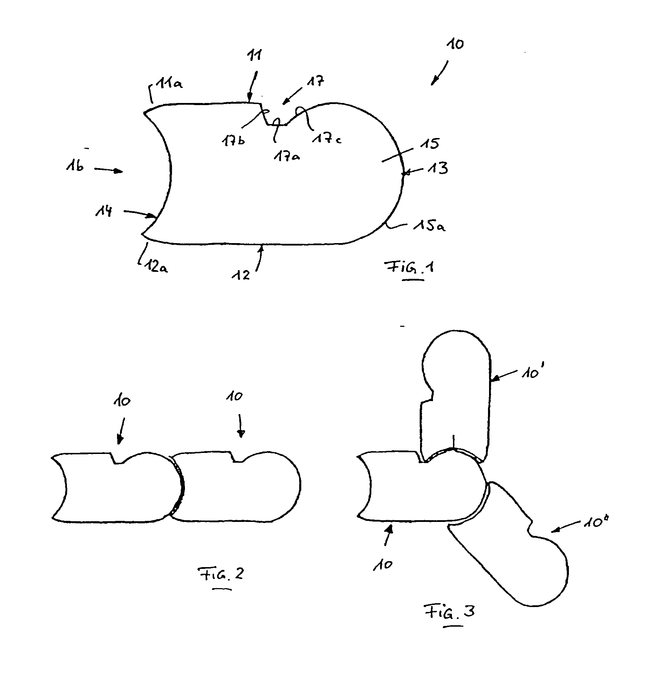

Ein Fig. 1 in Aufsicht dargestellter Rasen- oder Beetkantenstein 10 besteht aus Beton und weist über seine Höhe, d.h. senkrecht zur Zeichenebene, einen im wesentlichen gleichbleibenden Querschnitt auf. Er besitzt eine Vorderfläche 12, die im wesentlichen eben ausgebildet ist, und auf der entgegengesetzten Seite eine Rückfläche 11. An den seitlichen Enden der Vorderfläche 12 und der Rückfläche 11 erstrecken sich zwischen diesen entgegengesetzte Stirnseiten 13 und 14.

Die gemäß Fig. 1 rechte Stirnseite 13 ist als ein Kopf 15 ausgeformt, der einen teilkreisförmigen Querschnitt besitzt und dessen Mittelpunkt etwa in der Mitte des gegenseitigen Abstandes der Vorderfläche 12 und der Rückfläche 11 liegt. Im dargestellten Ausführungsbeispiel entspricht der Radius des Kopfes 15 im wesentlichen der halben Breite des Rasen- oder Beetkantensteins, d.h. dem halben Abstand zwischen Vorder- und Rückfläche 12, 11, so daß der Kopf 15 mit seiner Umfangsfläche 15a glatt und im wesentlichen tangential in die ebene Vorderfläche 12 übergeht.

Auf der Rückfläche 11 ist eine Vertiefung 17 ausgebildet, die einen im wesentlichen parallel zur Rückfläche 11 verlaufenden Vertiefungsgrund 17a und schräg verlaufende Seitenwände 17b und 17c aufweist, wobei die Seitenwand 17c gleichzeitig Teil der Umfangsfläche 15a des Kopfes 15 ist. Auf diese Weise ist erreicht, daß sich die Umfangsflä-che 15a des Kopfes 15 bis in die Vertiefung 17 hinein und über einen Winkelbereich von mehr 180°, im dargestellten Ausführungsbeispiel über ca. 225° erstreckt.

Auf der dem Kopf 15 entgegengesetzten Stirnseite 14 ist eine als Hohlkehle ausgebildete Aufnahme 16 vorgesehen, deren Krümmungsradius dem Radius des Kopfes 15 entspricht und deren konkave Umfangsfläche sich über ein Öffnungswinkel von ca. 90° erstreckt.

Die Vorderfläche 12 und die Rückfläche 11 sind in ihren der Aufnahme 16 zugewandten Endbereichen 11a, 12a unter stetiger Krümmung zur Mitte des Rasen- oder Beetkantensteines 10 hin eingezogen, so daß die Breite der Aufnahme 16 um ein geringes Maß, beispielsweise ca. 10%, geringer als der gegenseitige Abstand der Vorderfläche 12 und der Rückfläche 11 ist. Darüber hinaus ist im Eckbereich zwischen der Vorderfläche 12 bzw. der Rückfläche 11 und der konkaven Umfangsfläche der Aufnahme 16 eine spitzwinklige Kante gebildet.

Wie in Fig. 2 dargestellt ist, werden zum Aufbau einer Rasenkante mehrere als Rasenkantenteile dienende Rasen- oder Beetkantensteine 10 nebeneinander angeordnet, wobei der Kopf eines Rasen- oder Beetkantensteins in die Aufnahme des benachbarten Rasen- oder Beetkantensteines eingreift und die einander zugewandten Stirnseite der benachbarten Rasen- oder Beetkantensteine in Anlage kommen. Dabei ist auf der Vorderseite eine im wesentlichen glatte, lediglich durch den Einzug der Endbereiche 12a unterbrochene Begrenzungsfläche gebildet.

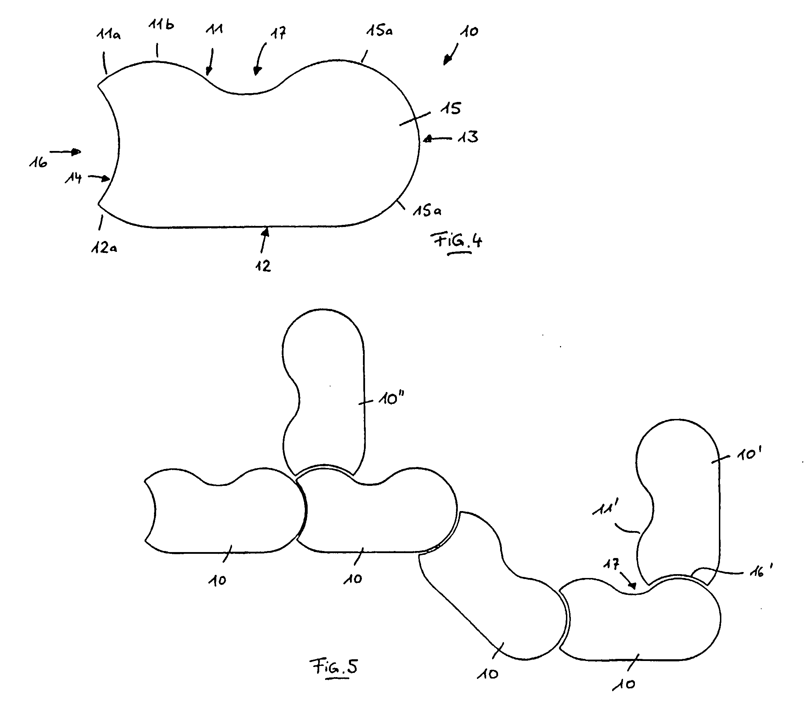

Da sich die Aufnahme 16 nur über einen Winkelbereich von ca. 90° erstreckt, der Kopf 15 jedoch eine Umfangsfläche über einen Bereich von ca. 225° aufweist, können nebeneinander angeordnete Rasen- oder Beetkantensteine 10 über einen Winkelbereich von ca. 135° in beliebiger Ausrichtung zueinander angeordnet werden, wobei jeweils der Kopf in der Aufnahme des benachbarten Rasen- oder Beetkantensteins liegt. Auf diese Weise können Abwinklungen zwischen benachbarten Rasen- oder Beetkantensteinen über einen großen Winkelbereich realisiert werden. Zwei mögliche Abwinklungen zweier benachbarter Rasen- oder Beetkantensteine sind in Fig. 3 dargestellt. Dabei zeigt der obere Rasen- oder Beetkantenstein 10' die obere maximal abgewinkelte Position, in der die zwischen der Rückfläche 11 und der Aufnahme 16 gebildete spitzwinklige Ecke in der Vertiefung 17 des anderen Rasen- oder Beetkantensteins 10 angeordnet ist. Der desweiteren dargestellte abgewinkelte Rasen- oder Beetkantenstein 10'' ist in der anderen extremen Stellung angeordnet, in der die Ecke zwischen der Vorderfläche 12 und der Aufnahme 16 im Übergang zwischen der Umfangsfläche des Kop-fes 15 und der Vorderfläche 12 des anderen Rasen- oder Beetkantensteins 10 liegt.

Fig. 4 zeigt eine alternative Ausgestaltung eines Rasen- oder Beetkantensteins 10 in Aufsicht, die sich von der Ausgestaltung gemäß Fig. 1 im wesentlichen nur durch die Gestaltung der Vertiefung 17 bzw. der Rückfläche 11 unterscheidet. Wie Fig. 4 zeigt, besitzt die auf der Rückfläche 11 im wesentlichen mittig angeordnete Vertiefung 17 einen konkaven Querschnitt und geht auf ihrer einen Seite glatt und stetig in die Umfangsfläche 15a des Kopfes 15 über. Auch hierbei ist somit erreicht, daß sich die Umfangsfläche 15a des Kopfes 15 bis in die Vertiefung hinein über einen Winkelbereich von mehr als 180° erstreckt.

Auf ihrer dem Kopf 15 abgewandten Seite geht die Vertiefung 17 stetig in einen konvex gekrümmten Abschnitt 11b über, der an seinem der Aufnahme 16 zugewandten Ende die spitzwinklige Kante mit dieser bildet. Die Krümmung des konvex gekrümmten Abschnitts 11b ist dabei vorzugsweise so ausgelegt, daß der Krümmungsradius dem Krümmungsradius des Kopfes 15 entspricht.

Bei dem in Fig. 4 dargestellten Rasen- oder Beetkantenstein 10 ist erreicht, daß die Rückfläche 11 ausgehend von ihrem eingezogenen Endbereich 11a über den im Querschnitt konvex gekrümmten Abschnitt 11b stetig in die konkav gekrümmte Vertiefung 17 übergeht, an die sich stetig die konvex gekrümmte Umfangsfläche 15a des Kopfes 15 anschließt. Die konvex gekrümmte Umfangsfläche 15a des Kopfes 15 geht ihrerseits glatt und stetig in die Vorderfläche 12 über, die an ihrem aufnahmeseitigen Ende unter stetiger Krümmung glatt in den eingezogenen Endbereich 12a übergeht.

Fig. 5 zeigt einige Anordnungsmöglichkeiten von benachbarten Rasen- oder Beetkantensteinen 10 zur Bildung einer Rasenkante, wobei jeweils der Kopf eines Rasen- oder Beetkantensteins in die Aufnahme des benachbarten Rasen- oder Beetkantensteins eingreift. Wie auf der rechten Seite der Fig. 5 dargestellt ist, lassen sich dabei auch rechtwinklige Rasenkantenverläufe erzielen, indem ein Rasen- oder Beetkantenstein 10' relativ zu einem benachbarten Rasen- oder Beetkantenstein 10 so angeordnet ist, daß die zwischen der Rückfläche 11' und der Aufnahme 16' gebildete spitzwinklige Ecke in die Vertiefung 17 des benachbarten Rasen- oder Beetkantensteins 10 eingreift.

Da der Krümmungsradius des zwischen der Vertiefung 17 und der Aufnahme 16 liegenden konvex gekrümmten Abschnitts 11b dem Krümmungsradius des Kopfes 15 entspricht, kann ein benachbarter Rasen- oder Beetkantenstein 10'' mit seiner Aufnahme auch an den konvex gekrümmten Abschnitt 11b angelegt werden, so daß Gabelungen der Rasenkante ausgebildet werden können.

## Patentansprüche

1. Rasen- oder Beetkantenstein zur Bildung einer Rasen- oder Beetkante, deren Oberseite im wesentlichen auf dem Höhenniveau einer angrenzenden Rasen- oder Beetfläche liegt, mit einer Vorderfläche (12), einer auf der entgegengesetzten Seite angeordneten Rückfläche (11), und dazwischen liegenden Stirnseiten (13, 14), wobei auf einer der Stirnseiten (13) ein vorstehender Kopf (15) und auf der anderen Stirnseite (14) eine Aufnahme (16) ausgebildet ist und wobei der Kopf (15) und die Aufnahme (16) bei der Bildung einer Rasen- oder Beetkante mit einer Aufnahme bzw. einem Kopf eines benachbarten Rasen- oder Beetkantensteins in Eingriff tritt, wobei auf der Rückfläche (11) eine sich über die gesamte Höhe des Rasen- oder Beetkantensteins erstreckende Vertiefung (17) ausgebildet ist und sich die Umfangsfläche (15a) des Kopfes (15) bis in die Vertiefung (17) hinein erstreckt und die Vorderfläche (12) im wesentlichen eben ausgebildet ist und glatt in die Umfangsfläche (15a) des Kopfes (15) übergeht, **dadurch gekennzeichnet, daß** die Aufnahme (16) sich über einen Winkel von ca. 90° erstreckt und daß die Vorderfläche (12) und die Rückfläche (11) in ihrem der Aufnahme (16) zugewandten Endbereich (11a, 12a) zur Mitte des Rasen- oder Beetkantensteins so eingezogen sind, daß die Breite der Aufnahme (16) um ca. 10% geringer als der gegenseitige Abstand der Vorder- und Rückfläche (12, 11) ist.

2. Rasen- oder Beetkantenstein nach Anspruch 1, **dadurch gekennzeichnet, daß** die eingezogenen Endbereiche (11a, 12a) jeweils gekrümmt in die Vorder- bzw. Rückfläche (12, 11) übergehen.

3. Rasen- oder Beetkantenstein nach Anspruch 2, **dadurch gekennzeichnet, daß** die Rückfläche (11) ausgehend von ihrem eingezogenen Endbereich (11a) einen konvex gekrümmten Abschnitt (11b) aufweist, der stetig in die konkav gekrümmte Vertiefung (17) übergeht, an die sich stetig die konvex gekrümmte Umfangsfläche (15a) des Kopfes (15) anschließt.

4. Rasen- oder Beetkantenstein nach Anspruch 1, **dadurch gekennzeichnet, daß** die eingezogenen Endbereiche (11a, 12a) abgewinkelt in die Vorder- bzw. Rückfläche (12, 11) übergehen.

5. Rasen- oder Beetkantenstein nach einem der Ansprüche 1 bis 4, **dadurch gekennzeichnet, daß** die Vertiefung (17) einen im wesentlichen parallel zur Rückfläche (11) verlaufenden Vertiefungsgrund (17a) und schräg verlaufende Seitenwände (17b, 17c) aufweist, von denen eine (17c) Teil der Umfangsfläche (15a) des Kopfes (15) ist.

6. Rasen- oder Beetkantenstein nach einem der Ansprüche 1 bis 4, **dadurch gekennzeichnet, daß** die Vertiefung (17) im Querschnitt im wesentlichen konkav ausgebildet ist.

7. Rasen- oder Beetkantenstein nach einem der Ansprüche 1 bis 6, **dadurch gekennzeichnet, daß** die Oberfläche der Vertiefung (17) glatt und stetig in die Rückfläche (11) und die Umfangsfläche (15a) des Kopfes (15) übergeht.

8. Rasen- oder Beetkantenstein nach einem der Ansprüche 1 bis 7, **dadurch gekennzeichnet, daß** die Vertiefung (17) auf der Rückfläche (11) im wesentlichen mittig angeordnet ist.

9. Rasen- oder Beetkantenstein nach einem der Ansprüche 1 bis 8, **dadurch gekennzeichnet, daß** sich die Umfangsfläche (15a) des Kopfes (15) über einen Winkelbereich von ca. 180° bis 225° erstreckt.

10. Rasen- oder Beetkantenstein nach einem der Ansprüche 1 bis 9, **dadurch gekennzeichnet, daß** der Kopf (15) einen teilkreisförmig konvexen Querschnitt aufweist.

11. Rasen- oder Beetkantenstein nach Anspruch 10, **dadurch gekennzeichnet, daß** die Vorderfläche (12) tangential in die Umfangsfläche (15a) des Kopfes (15) übergeht.

12. Rasen- oder Beetkantenstein nach einem der Ansprüche 1 bis 9, **dadurch gekennzeichnet, daß** der Kopf (15) einen polygonförmigen Querschnitt insbesondere in Form eines regelmäßigen Vielecks aufweist.

13. Rasen- oder Beetkantenstein nach einem der Ansprüche 1 bis 12, **dadurch gekennzeichnet, daß** der Kopf (15) und die Aufnahme (16) jeweils mittig auf der jeweiligen Stirnseite (13, 14) ausgebildet sind.

14. Rasen- oder Beetkantenstein nach einem der Ansprüche 1 bis 13, **dadurch gekennzeichnet, daß** die Aufnahme (16) eine Hohlkehle ist.

15. Rasen- oder Beetkantenstein nach einem der Ansprüche 1 bis 14, **dadurch gekennzeichnet, daß** die Aufnahme (16) einen teilkreisförmig konkaven Querschnitt aufweist.

16. Rasen- oder Beetkantenstein nach einem der Ansprüche 1 bis 14, **dadurch gekennzeichnet, daß** die Aufnahme (16) einen polygonförmigen Querschnitt aufweist.

17. Rasen- oder Beetkantenstein nach einem der Ansprüche 1 bis 16, **dadurch gekennzeichnet, daß** er aus Beton besteht.

18. Rasen- oder Beetkantenstein nach einem der Ansprüche 1 bis 17, **dadurch gekennzeichnet, dass** er eine Höhe von 2 bis 8 cm und insbesondere von etwa 4 bis 5 cm aufweist.

## Claims

1. Lawn or flowerbed border stone for forming a lawn or flowerbed edge, whose top surface is substantially at the same height as an adjacent lawn or flowerbed surface, having a front face (12), a rear face (11) located on the opposite side, and intermediate end faces (13 14), where on one of the end faces (13) is formed a projecting head (15) and on the other end face (14) a receptacle (16) and in which the head (15) and receptacle (16) during the formation of a lawn or flowerbed edge come into engagement with a receptacle or head of an adjacent lawn or flowerbed border stone, in which on the rear face (11) is formed a depression (17) extending over the entire lawn or flowerbed border stone height and the circumferential surface (15a) of the head (15) extends into the depression (17) and the front face (12) is substantially planar and passes smoothly into the circumferential surface (15a) of the head (15), **characterized in that** the receptacle (16) extends over an angle of approximately 90° and that the front face (12) and rear face (11) in the end region (11a, 12a) thereof facing the receptacle (16) are so retracted towards the centre of the lawn or flowerbed border stone that the width of the receptacle (16) is approximately 10% less than the mutual spacing of the front and rear faces (12, 11).

2. Lawn or flowerbed border stone according to claim 1, **characterized in that** the retracted end regions (11a, 12a) in each case pass in curved manner into the front or rear face (12, 11).

3. Lawn or flowerbed border stone according to claim 2, **characterized in that**, starting from its retracted end region (11a), the rear face (11) has a convexly curved portion (11b), which passes constantly into the concavely curved depression (17), to which is constantly connected the convexly curved circumferential surface (15a) of head (15).

4. Lawn or flowerbed border stone according to claim 1, **characterized in that** the retracted end regions (11a, 12a) pass in angled manner into the front or rear face (12, 11).

5. Lawn or flowerbed border stone according to one of the claims 1 to 4, **characterized in that** the depression (17) has a base (17a) running substantially parallel to the rear face (11) and sloping side walls (17b, 17c), whereof one (17c) is part of the circumferential surface (15a) of head (15).

6. Lawn or flowerbed border stone according to one of the claims 1 to 4, **characterized in that**, in cross-section, the depression (17) is substantially concave.

7. Lawn or flowerbed border stone according to one of the claims 1 to 6, **characterized in that** the surface of the depression (17) is smooth and passes continuously into the rear face (11) and circumferential surface (15a) of head (15).

8. Lawn or flowerbed border stone according to one of the claims 1 to 7, **characterized in that** the depression (17) is substantially centrally positioned on the rear face (11).

9. Lawn or flowerbed border stone according to one of the claims 1 to 8, **characterized in that** the circumferential surface (15a) of head (15) extends over an angular range of approximately 180 to 225°.

10. Lawn or flowerbed border stone according to one of the claims 1 to 9, **characterized in that** the head (15) has a pitch circular convex cross-section.

11. Lawn or flowerbed border stone according to claim 10, **characterized in that** the front face (12) passes tangentially into the circumferential surface (15a) of head (15).

12. Lawn or flowerbed border stone according to one of the claims 1 to 9, **characterized in that** head (15) has a polygonal cross-section, particularly in the form of a regular polygon.

13. Lawn or flowerbed border stone according to one of the claims 1 to 12 **characterized in that** the head (15) and receptacle (16) are in each case formed centrally on the particular end face (13, 14).

14. Lawn or flowerbed border stone according to one of the claims 1 to 13, **characterized in that** the receptacle (16) is a fillet.

15. Lawn or flowerbed border stone according to one of the claims 1 to 14, **characterized in that** the receptacle (16) has a pitch circular concave cross-section.

16. Lawn or flowerbed border stone according to one of the claims 1 to 14, **characterized in that** the receptacle (16) has a polygonal cross-section.

17. Lawn or flowerbed border stone according to one of the claims 1 to 16, **characterized in that** it is made from concrete.

18. Lawn or flowerbed border stone according to one of the claims 1 to 17, **characterized in that** has a height of 2 to 8 cm and in particular approximately 4 to 5 cm.

## Revendications

1. Pierre de bordure de gazon ou de plate-bande pour former une bordure de gazon ou de plate-bande, dont la face supérieure est située sensiblement au même niveau de hauteur qu'une surface de gazon ou de plate-bande voisine, présentant une face avant (12), une face arrière (11) disposée à l'opposé, et des faces frontales (13,14) situées entre celles-ci, dans laquelle une tête en saillie (15) est conformée sur l'une des faces frontales (13) et un logement ménagé dans l'autre face frontale (14), dans laquelle la tête (15) et le logement (16) viennent en prise avec un logement ou une tête d'une pierre de bordure de gazon ou de plate-bande voisine lors de la constitution d'une bordure de gazon ou de plate-bande, dans laquelle un évidement (17) s'étendant sur la totalité de la hauteur de la pierre de bordure de gazon ou de plate-bande est ménagé dans la face arrière (11), dans laquelle la surface circonférencielle (15a) de la tête (15) s'étend jusque dans l'évidement (17) et la face avant (12) est conformée sensiblement plane et se prolonge de manière régulière pour former la surface circonférencielle (15a) de la tête (15), **caractérisée en ce que** le logement (16) s'étend sur un angle d'environ 90° et **en ce que** dans leurs zones d'extrémité (11a, 11b) en regard du logement (16), la face avant (12) et la face arrière (11) sont rentrées de telle façon vers le centre de la pierre de bordure de gazon ou de plate-bande que la largeur du logement (16) est inférieure d'environ 10 % à la distance séparant les faces avant et arrière (12, 11).

2. Pierre de bordure de gazon ou de plate-bande selon la revendication 1, **caractérisée en ce que** les zones d'extrémité rentrées (11a, 12a) se prolongent chacune par une courbure dans la face avant ou arrière (12, 11).

3. Pierre de bordure de gazon ou de plate-bande selon la revendication 2, **caractérisée en ce que** la face arrière (11) présente à partir de sa zone d'extrêmité rentrée (11a) une partie (11b) à courbure convexe, se prolongeant de manière continue dans l'évidement (17) à courbure concave, auquel se rattache de manière continue la surface circonférencielle (15a) à courbure convexe de la tête (15).

4. Pierre de bordure de gazon ou de plate-bande selon la revendication 1, **caractérisée en ce que** les zones d'extrémité rentrées (11a, 12a) se prolongent vers les faces avant ou arrière (12, 11) pour se confondre avec elles en formant un angle.

5. Pierre de bordure de gazon ou de plate-bande selon l'une quelconque des revendications 1 à 4, **caractérisée en ce que** l'évidement (17) présente un fond d'évidement (17a) s'étendant sensiblement parallèle à la face arrière (11) et des faces latérales (17b, 17c) s'étendant en oblique, dont l'une (17c) forme une partie de la surface circonférencielle (15a) de la tête (15).

6. Pierre de bordure de gazon ou de plate-bande selon l'une quelconque des revendications 1 à 4, **caractérisée en ce que** l'évidement (17) présente une section à conformation sensiblement concave.

7. Pierre de bordure de gazon ou de plate-bande selon l'une quelconque des revendications 1 à 6, **caractérisée en ce que** la surface de l'évidement (17) se prolonge de manière régulière et continue dans la face arrière (11) et la surface circonférencielle (15a) de la tête (15).

8. Pierre de bordure de gazon ou de plate-bande selon l'une quelconque des revendications 1 à 7, **caractérisée en ce que** l'évidement (17) est ménagé sensiblement au centre de la face arrière (11).

9. Pierre de bordure de gazon ou de plate-bande selon l'une quelconque des revendications 1 à 8,
**caractérisée en ce que** la surface circonférencielle (15a) de la tête (15) s'étend sur une zone angulaire d'environ 180 à 225°.

10. Pierre de bordure de gazon ou de plate-bande selon l'une quelconque des revendications 1 à 9, **caractérisée en ce que** la tête (15) présente une section convexe en arc de cercle.

11. Pierre de bordure de gazon ou de plate-bande selon la revendication 10, **caractérisée en ce que** la face avant (12) se prolonge de manière tangentielle dans la surface circonférencielle (15a) de la tête (15).

12. Pierre de bordure de gazon ou de plate-bande selon l'une quelconque des revendications 1 à 9, **caractérisée en ce que** la tête (15) présente une section polygonale, en particulier sous la forme d'un polygone régulier.

13. Pierre de bordure de gazon ou de plate-bande selon l'une quelconque des revendications 1 à 12, **caractérisée en ce que** la tête (15) et le logement (16) sont chacun conformés au centre de la face frontale (13, 14) respective.

14. Pierre de bordure de gazon ou de plate-bande selon l'une quelconque des revendications 1 à 13, **caractérisée en ce que** le logement (16) est une moulure creuse.

15. Pierre de bordure de gazon ou de plate-bande selon l'une quelconque des revendications 1 à 14, **caractérisée en ce que** le logement (16) présente une section concave en arc de cercle.

16. Pierre de bordure de gazon ou de plate-bande selon l'une quelconque des revendications 1 à 14, **caractérisée en ce que** le logement (16) présente une section polygonale.

17. Pierre de bordure de gazon ou de plate-bande selon l'une quelconque des revendications 1 à 16, **caractérisée en ce qu'**il est en béton.

18. Pierre de bordure de gazon ou de plate-bande selon l'une quelconque des revendications 1 à 17, **caractérisée en ce qu'**elle présente une hauteur de 2 à 8 cm, et plus particulièrement d'environ 4 à 5 cm.
